**Europäisches Patentamt**

**European Patent Office**

**Office européen des brevets**

(19)

(11) Numéro de publication: **0 148 428**
**B1**

(12)

# FASCICULE DE BREVET EUROPÉEN

(45) Date de publication du fascicule du brevet:
17.12.86

(51) Int. Cl.⁴: **A 23 L 1/226,** A 23 L 1/227

(21) Numéro de dépôt: **84114955.2**

(22) Date de dépôt: **08.12.84**

(54) **Produit aromatisant.**

(30) Priorité: **29.12.83 CH 6967/83**

(43) Date de publication de la demande:
**17.07.85 Bulletin 85/29**

(45) Mention de la délivrance du brevet:
**17.12.86 Bulletin 86/51**

(84) Etats contractants désignés:
**AT BE DE FR IT NL SE**

(56) Documents cité:
**FR-A-2 135 158**

**CHEMICAL ABSTRACTS, vol. 79, no. 11, 17
septembre 1973, page 311, no. 64594k, Columbus,
Ohio, US; K. PRENDERGAST: "Versatility of
hydrolyzed proteins"**

(73) Titulaire: **SOCIETE DES PRODUITS NESTLE S.A.,
Case postale 353, CH- 1800 Vevey (CH)**

(72) Inventeur: **Heyland, Sven, Im Rohr, CH- 8501 Warth
(CH)**
Inventeur: **Fournet, Gaston, Rue des 6-enfants,
F-50000 St- Lo (FR)**
Inventeur: **Bösch, Hans, Baumschulstrasse 9, CH-
8542 Wiesendangen (CH)**

LIBER. STOCKHOLM 1986

## Description

La présente invention a pour objet un produit aromatisant conférant le goût du fromage ainsi qu'un procédé de fabrication d'un tel produit.

On peut ranger les procédés connus de préparation de produits aromatisants conférant le goût du fromage en trois catégories, à savoir ceux qui comportent la fermentation d'une matière première adéquate avec des microorganismes produisant une note aromatique de fromage, ceux qui utilisent des mélanges de composants aromatiques découverts dans le fromage et ceux qui impliquent la concentration de fractions aromatiques du fromage ou de produits fromagers.

Dans un procédé connu de la première catégorie, on sèche par atomisation un milieu de culture contenant au moins une protéine et au moins un hydrate de carbone sur lequel on a fait croître en symbiose un microorganisme non toxique du genre Bacillus et un microorganisme non toxique du genre Streptococcus, on mélange cette poudre aromatique avec de la matière grasse et une poudre de levure et petit-lait, on extrude le mélange et l'on réduit le boudin extrudé en petits morceaux ou granules. Ce procédé est très compliqué.

Dans un procédé connu de la deuxième catégorie, on confère à certains aliments un arôme de fromage bleu en y ajoutant une quantité efficace de 1- octène-3-ol ainsi qu'une 2-alcanone ayant de 5 à 15 atomes de carbone. Ce genre d'aromatisation est très spécifique.

Dans un procédé connu de la troisième catégorie, on broie finement du fromage, on y mélange de l'huile, on brasse durant quelques minutes à environ 60°C, on sépare l'huile chargée d'arôme du fromage, on ajoute le résidu sec à des biscuits avant de les passer au four et on pulvérise l'huile sur les biscuits à leur sortie du four. On peut dire que de cette manière l'arôme du fromage est dilué dans l'huile.

La présente invention a pour but de proposer un produit aromatisant concentré conférant un goût de fromage à la fois caractéristique et équilibré, ainsi qu'un procédé industriel de fabrication d'un tel produit.

A cet effet, le produit aromatisant conférant le goût du fromage selon la présente invention est caractérisé par le fait qu'il comprend 5-40 parties en poids d'hydrolysat de protéines végétales, 3-20 parties en poids de leucine et 15-30 parties en poids de matière grasse aromatique contenant des substances aromatiques de la croûte d'un fromage à pâte dure ou mi-dure.

De préférence, le présent produit aromatisant comprend en outre 1-20 parties en poids de glutamate monosodique, 1-5 parties en poids de chlorure de sodium, 1-20 parties en poids d'hydrolysat de caséine et 1-20 parties en poids de petit-lait en poudre.

Le procédé de fabrication d'un produit aromatisant conférant le goût du fromage selon la présente invention est caractérisé par le fait que l'on sépare une fraction aromatique contenant des substances aromatiques de la croûte d'un fromage à pâte dure ou mi-dure et l'on en prépare une matière grasse aromatique que l'on mélange à raison de 15-30 parties en poids avec 5-40 parties en poids d'hydrolysat de protéines végétales et 3-20 parties en poids de leucine.

De préférence, on ajoute au mélange 1-20 parties en poids de glutamate monosodique, 1-5 parties en poids de chlorure de sodium, 1-20 parties en poids d'hydrolysat de caséine et 1-20 parties en poids de petit-lait en poudre.

Dans le présent exposé, le terme croûte de fromage est à comprendre comme la partie extérieure de pièces de fromages telles que des meules ou des roues de Gruyère ou d'Emmental p. ex., durcie à l'air et représentant environ 3-4 % du poids total de la pièce de fromage.

On a constaté qu'il était possible de préparer un produit aromatisant concentré conférant un goût de fromage à la fois caractéristique et équilibré à partir de certaines croûtes de fromage dont aucun usage n'était fait jusque-là dans l'alimentation humaine. L'exploitation des croûtes de fromage est délicate car elles présentent en elles-mêmes un goût très amer. On a trouvé qu'il était possible d'en extraire une fraction aromatique qui peut entrer dans la composition d'un produit aromatisant et le rendre capable de conférer un goût de fromage caractéristique. Mais on a trouvé que ceci n'était possible qu'à condition de faire entrer en outre dans la composition du produit des ingrédients adéquats précis qui le rendent capable de conférer un goût de fromage non seulement caractéristique mais aussi équilibré.

Dans le présent produit, l'hydrolysat de protéines végétales joue le rôle d'une source d'acides aminés destinés à équilibrer le goût. Un hydrolysat acide neutralisé et décoloré d'un tourteau d'oléagineux se prête avantageusement à ce rôle.

La leucine exerce un effet de synergie ou renforçateur de goût tout à fait surprenant. On peut observer particulièrement bien cet effet lorsque la leucine présente un degré de pureté d'au moins 60 %. Une leucine qui convient bien dans le présent produit peut être obtenue p. ex. par filtration d'un hydrolysat acide neutralisé de protéines végétales et recristallisation du filtrat.

Les teneurs indiquées du présent produit en hydrolysat de protéines végétales et en leucine ont été arrêtées après de nombreux essais organoleptiques. Elles indiquent quelle quantité de chaque ingrédient le produit doit au moins comprendre pour que l'effet attendu de chaque ingrédient soit appréciable et quelles quantités ne doivent pas être dépassées si l'on ne veut pas provoquer un déséquilibre notable.

Ladite matière grasse aromatique joue le rôle de porteur du goût caractéristique. Elle peut consister en la matière grasse même de la croûte ou être une autre matière grasse, notamment une huile végétale aromatisée par des substances aromatiques extraites de la croûte d'un fromage à pâte dure ou mi-dure. Ce fromage est de préférence du type Emmental ou Gruyère.

La teneur indiquée du présent produit en matière grasse aromatique, à savoir 15 à 25 parties en poids, est telle que le produit soit capable de conférer un goût caractéristique appréciable de fromage tout en pouvant rester sous forme pulvérulente.

Dans la forme d'exécution préférée du présent produit indiquée plus haut, le glutamate monosodique et le chlorure de sodium jouent le rôle de renforçateurs de goût.

L'hydrolysat de caséine représente également une source d'acides aminés et de peptides. Il présente de préférence un degré d'hydrolyse de 35 à 45 %; on entend par là, dans le présent exposé, que 35 à 45 % de l'azote total a été solubilisé par l'hydrolyse et reste en solution à pH 4,7. Un tel hydrolysat est beaucoup plus dégradé qu'un fromage affiné. Il est très amer si on le déguste tel quel. On a constaté cependant qu'il permet d'équilibrer de manière surprenante et remarquable le goût conféré par le présent produit aromatisant. L'équilibre atteignable n'est pas aussi satisfaisant lorsque le degré d'hydrolyse de l'hydrolysat est inférieur à 35 %, alors qu'au-delà de 45 % il est malgré tout rompu par une certaine amertume. Un hydrolysat de caséine qui convient particulièrement bien dans le présent produit peut être obtenu par dégradation à l'aide de souches de Penicillium camemberti ou candidum.

Le petit-lait en poudre joue surtout le rôle d'agent dispersant de la matière grasse et représente une aide efficace pour éviter que le présent produit ne se prenne en masse.

Pour mettre en oeuvre le présent procédé, on peut utiliser p. ex. les croûtes qui résultent de la mise en emballage sous vide de portions de fromage d'Emmental ou de Gruyère telles qu'elles sont commercialisées dans des magasins à grande surface p. ex. Dans ce cas, les roues ou meules de fromage sont d'abord légèrement raclées en surface, ce qui représente un prélèvement de environ 1 % du poids d'une pièce d'Emmental p. ex. Ce premier prélèvement est jeté. Puis la croûte est rabotée sur une épaisseur de quelques mm, ce qui représente environ 2-3 % du poids total du fromage. Ces copeaux de croûte rabotée se prêtent particulièrement bien à la mise en oeuvre de la présente invention.

On peut séparer directement la matière grasse même de ladite croûte par pressage et/ou centrifugation afin d'obtenir ladite matière grasse aromatique. Pour ce faire, on peut p. ex. écraser la croûte entre les plaques d'une presse sous une pression de 15 à 30 bars à une température de 40 à 60°C. De préférence, on pasteurise ensuite la matière grasse ainsi exprimée.

On peut aussi séparer ladite fraction aromatique par distillation à la vapeur de ladite croûte et préparer ladite matière grasse aromatique par extraction des substances aromatiques du distillat avec une autre matière grasse que celle de ladite croûte, notamment avec une huile végétale. Pour ce faire, on peut p. ex. mettre la croûte finement divisée, p. ex. débitée en copeaux ou râpée, en suspension dans une certaine quantité d'eau, ajuster le pH de la suspension à environ 4 p. ex. pour libérer les acides gras volatils qui seraient immobilisés sous forme de sels, porter la température de la suspension à 100°C et la faire traverser par une certaine quantité de vapeur d'eau à pression atmosphérique qui se charge notamment d'acides gras volatils et que l'on récupère comme distillat. Si l'on procède de la sorte, on utilise avantageusement une quantité pondérale de vapeur sensiblement égale au poids des copeaux. En effet, avec une quantité moindre, on extrait moins de substances aromatiques alors qu'avec une quantité supérieure on les dilue. On peut alors, le cas échéant, purifier le distillat, notamment par traitement sur résine de polystyrène sans groupes fonctionnels.

Pour extraire lesdites substances aromatiques du distillat, on utilise de préférence une matière grasse liquide ou semi-liquide à température ambiante. Une matière grasse à point de fusion trop élevé telle qu'un premier jus p. ex. donne un produit qui laisse une impression de graisse figée dans la bouche. On utilise donc de préférence une huile, notamment l'huile de beurre ou des huiles végétales telles que l'huile de tournesol ou d'arachides. Le fait qu'une matière grasse très liquide pourrait conférer au produit une tendance à coller est compensé par la présence des autres ingrédients qui jouent le rôle d'agent dispersant ou absorbant de la matière grasse.

Pour faciliter l'extraction desdites substances aromatiques du distillat, on peut tout d'abord saturer le distillat avec du chlorure de sodium. On peut ensuite p. ex. mélanger le distillat avec une partie de l'huile choisie, agiter quelques minutes, séparer l'huile et répéter cette opération avec une autre partie de l'huile choisie.

Dans la forme préférée d'exécution du présent procédé indiquée plus haut, on incorpore audit mélange 1-20 parties en poids d'hydrolysat de caséine. On incorpore de préférence un hydrolysat de caséine présentant un degré d'hydrolyse de 35-45 %. On peut obtenir un tel hydrolysat par dégradation à l'aide de souches de Penicillium camemberti ou candidum. Pour ce faire, on peut p. ex. partir d'un lait maigre, l'inoculer avec des ferments lactiques, laisser le pH descendre suffisamment bas pour provoquer la coagulation, séparer le caillé du petit-lait et disposer le caillé sur des plateaux en couche de un à quelques cm d'épaisseur. On peut aussi partir directement de caséine acide du commerce qu'il faut alors reconstituer par addition d'eau. On peut alors pulvériser sur les plateaux un inoculum de Penicillium candidum ou camemberti et laisser travailler la souche durant environ 7-15 jours en atmosphère saturée d'humidité à une température de 8-14°C. On peut avantageusement broyer alors la masse de caillé et laisser travailler encore la souche durant quelques jours. On peut ensuite pasteuriser et sécher par atomisation.

Pour réaliser ledit mélange, on mélange de préférence tout d'abord les ingrédients secs sur lesquels on pulvérise ensuite ladite matière grasse aromatique tout en brassant. Dans la forme préférée d'exécution du présent procédé indiquée plus haut, on peut mélanger tout d'abord l'hydrolysat de protéines végétales, le glutamate monosodique, la leucine, la poudre de petit-lait, l'hydrolysat de caséine et le sel, pulvériser dessus la matière grasse aromatique tout en brassant et enfin homogénéiser le mélange.

Le présent produit peut être utilisé pour conférer le goût du fromage à des sauces ou à des préparations culinaires p. ex. Il se prête aussi particulièrement bien à l'aromatisation de pommes chips ou de biscuits pour l'apéritif. Il est avantageusement utilisé en quantités pondérales environ trois ou quatre fois moindres que les quantités de fromage à pâte extra-dure finement râpé, du type Sbrinz ou Parmesan p. ex., que l'on utiliserait pour le même usage.

Si l'on prend soin d'utiliser pour sa confection des ingrédients présentant une humidité résiduelle suffisamment faible, à savoir inférieure ou égale à environ 3-4 %, le présent produit peut présenter d'excellentes qualités de conservation et supporter p. ex. des entreposages à température ambiante supérieurs à 6 mois sans présenter d'altération notable.

Les exemples ci-après sont présentés à titre d'illustration. Les pourcentages et parties y sont donnés en poids sauf indication contraire.

**Exemple 1**

On recueille des croûtes fraîchement rabotées de fromages d'Emmental et de Gruyère. La composition de ces croûtes est donnée ci-dessous, de même que, à titre de comparaison, la composition du fromage d'Emmental

|  | Gruyère croûte % | Emmental croûte % | Emmental fromage % |
|---|---|---|---|
| matière sèche | 69,3 | 79,0-80,3 | 58,3 |
| matière grasse | 30,9 | 36,2-37,3 | 32,3 |
| azote total | 4,0 | 5,2- 5,9 | 4,5 |
| azote ∝-aminé | 0,31 | 0,14-0,69 | 0,05 |
| cendres | 8,7 | 4,1-6,8 | 3,3 |
| chlorure (mesuré comme NaCl) | 1,4 | 0,63-1,1 | 0,44 |

On prend deux parties de croûte d'Emmental et une partie de croûte de Gruyère, on les presse dans une presse hydraulique sous 23 bars à 50°C et l'on en exprime 27 % de matière grasse aromatisée. On pasteurise cette matière grasse par chauffage à 98°C durant 5 min.

On inocule un lait maigre avec des ferments lactiques. On arrête la fermentation à pH 4,4. On sépare le sérum du caillé. On étend le caillé sur des plateaux en une couche de 3 cm d'épaisseur. On pulvérise sur le caillé un inoculum de Penicillium candidum. On laisse les plateaux durant 10 j dans un air à 98 % d'humidité et à une température de 11-12°C. On broye alors le caillé et on le laisse reposer encore 4 j dans les mêmes conditions. On le pasteurise et on le sèche par atomisation. On obtient ainsi un hydrolysat de caséine présentant un degré d'hydrolyse de 42,8 % et une teneur en matière sèche de 96 %.

Par ailleurs on recueille, par filtration d'un hydrolysat acide neutralisé de tourteau d'arachide et recristallisation du filtrat, une leucine technique à 99,6 % de matière sèche contenant 65 % de leucine pure, 13 % de Cl-, 18 % d'isoleucine et 2 % de valine, le reste étant constitué principalement de cendres et de phénylalanine.

Dans un mélangeur horizontal en forme de bassine cylindrique dans l'axe horizontal de laquelle tourne un axe muni de bras radiaux, on mélange à sec 19,5 kg d'hydrolysat acide de tourteau d'arachide neutralisé et décoloré présentant une teneur en matière sèche de 98 %, 16 kg de la leucine technique ci-dessus, 7,25 kg de glutamate monosodique, 4,25 kg de chlorure de sodium, 15 kg de petit-lait en poudre présentant une teneur en matière sèche de 97 % et 15 kg de l'hydrolysat de caséine ci-dessus. On pulvérise ensuite sur les ingrédients secs 23 kg de la matière grasse aromatisée pasteurisée ci-dessus, tout en brassant. On homogénéise alors le mélange.

On obtient un produit aromatisant sous forme de grains fins et légers, à écoulement libre qui présente l'aspect d'un fromage à pâte extra-dure finement moulu mais possède un pouvoir aromatisant environ quatre fois plus élevé. Sa teneur en matière sèche est supérieure à 96 % et il se conserve durant au moins 6 mois à température ambiante. Ce produit aromatisant dégusté à raison de quelques grains sur la langue dégage un goût à la fois parfaitement équilibré et caractéristique du fromage.

## Exemples d'application

On utilise avec succès le produit aromatisant obtenu à l'exemple 1,

a) dans une sauce instantanée au fromage comprenant amidon, farine, poudre de lait, renforçateurs d'arôme et épices, à raison de 7 % de produit aromatisant par rapport au poids total de la sauce instantanée, ce qui équivaut à 10 g de produit aromatisant par 1 de sauce reconstituée,

b) dans un mélange sec pour soufflé au fromage, à raison de 5 % de produit aromatisant par rapport au poids total du mélange sec, en combinaison avec 10 % de poudre de fromage, 220 g de mélange sec étant utilisés pour la confection de 1 kg de soufflé,

c) dans un mélange de base pour la confection d'une sauce au fromage devant entrer dans la composition d'un mets à base de pâtes alimentaires, à raison de 3-5 % de produit aromatisant par rapport au poids total du mélange de base qui comporte par ailleurs de l'amidon de céréales, des épices et 10-15 % de poudre de fromage, 110 g de mélange de base étant utilisés pour la confection de 1 kg de sauce,

d) dans un mélange sec pour enrober des amuse-bouches, comprenant de la maltodextrine et des épices, à raison de 20-30 % de produit aromatisant par rapport au poids total du mélange sec, 120 g de ce dernier étant utilisés pour enrober 1 kg de snack.

## Exemple 2

635 g de copeaux de croûte d'Emmental telle que décrite à l'exemple 1 sont mis en suspension dans 1,27 kg d'eau. On ajuste le pH de la suspension à 4 et on la place dans un ballon de distillation. On porte la température de la suspension à 100°C et on la fait traverser par 635 g de vapeur d'eau à pression atmosphérique. On recueille 635 g de distillat.

On sature le distillat avec 230 g de chlorure de sodium, on y ajoute 77 g d'huile de tournesol, on agite le tout durant 5 min à température ambiante et on sépare les phases grasse et aqueuse. On met de côté l'huile aromatisée et l'on répète l'opération deux fois de suite avec deux nouvelles charges d'huile de tournesol. On obtient 230 g d'huile aromatisée, autrement dit de matière grasse aromatisée.

On mélange à sec 200 g d'hydrolysat de protéines végétales décoloré, 150 g de leucine technique, 80 g de glutamate monosodique, 30 g de chlorure de sodium, 180 g de petit-lait en poudre et 160 g d'un hydrolysat de caséine préparé de manière semblable à celle décrite à l'exemple 1 et présentant un degré d'hydrolyse de 43,7 %. On pulvérise ensuite sur les ingrédients secs 200 g de la matière grasse aromatisée ci-dessus, tout en brassant. On homogénéise le mélange et l'on obtient un produit aromatisant sous forme de grains fins à écoulement libre dont le pouvoir aromatisant est presque aussi grand que celui du produit de l'exemple 1 et qui est capable de conférer un goût à la fois équilibré et caractéristique du fromage à des sauces, mets et amuse-bouches p. ex.

## Exemple 3

511 g de copeaux de croûte d'Emmental telle que décrite à l'exemple 1 sont mis en suspension dans 1020 g d'eau. On ajuste le pH de la suspension à 4 et on la place dans un ballon de distillation. On porte la température de la suspension à 100°C et on la fait traverser par 511 g de vapeur d'eau à pression atmosphérique. On recueille 511 g de distillat.

On purifie ce distillat en le traitant durant 30 min à 20°C avec 4 g de résine de polystyrène sans groupes fonctionnels.

On sature le distillat avec 184 g de chlorure de sodium, on y ajoute 62 g d'huile de tournesol, on agite le tout durant 5 min à température ambiante et on sépare les phases grasse et aqueuse. On met de côté l'huile aromatisée et l'on répète l'opération deux fois de suite avec deux nouvelles charges d'huile de tournesol. On obtient 185 g d'huile aromatisée, autrement dit de matière grasse aromatisée.

On mélange à sec 220 g d'hydrolysat acide de protéines végétales neutralisé et décoloré sur charbon actif, 150 g de leucine technique, 70 g de glutamate monosodique, 40 g de chlorure de sodium, 180 g de petit-lait en poudre et 160 g d'un hydrolysat de caséine préparé de manière semblable à celle décrite à l'exemple 1 et présentant un degré d'hydrolyse de 40,75 %. On pulvérise ensuite sur ies ingrédients secs 180 g de la matière grasse aromatisée ci-dessus, tout en brassant. On homogénéise le mélange et l'on obtient un produit aromatisant qui se distingue du produit de l'exemple 2 par le fait qu'il confère un goût caractéristique légèrement plus fin de fromage, tout en étant aussi équilibré et en ayant un pouvoir aromatisant comparable.

**Exemple comparatif**

On prépare un produit aromatisant de manière semblable à celle décrite à l'exemple 1, à l'exception du fait que l'on pousse moins loin l'hydrolyse de la caséine et que l'hydrolysat de caséine présente un degré d'hydrolyse de 29,8 %. Le produit est jugé comme conférant un goût nettement moins équilibré que celui de l'exemple 1 par un jury de dégustateurs avertis.

**Revendications**

1. Produit aromatisant conférant le goût du fromage, caractérisé par le fait qu'il comprend 5-40 parties en poids d'hydrolysat de protéines végétales, 3-20 parties en poids de leucine et 15-30 parties en poids de matière grasse aromatique contenant des substances aromatiques de la croûte d'un fromage à pâte dure ou mi-dure.

2. Produit selon la revendication 1, caractérisé par le fait qu'il comprend en outre 1-20 parties en poids de glutamate monosodique, 1-5 parties en poids de chlorure de sodium, 1-20 parties en poids d'hydrolysat de caséine et 1-20 parties en poids de petit-lait en poudre.

3. Produit selon la revendication 1, caractérisé par le fait que ladite matière grasse aromatique est la matière grasse même de la croûte.

4. Produit selon la revendication 1, caractérisé par le fait que ladite matière grasse aromatique est une huile végétale aromatisée par des substances aromatiques extraites de la croûte.

5. Produit selon la revendication 2, caractérisé par le fait que ledit hydrolysat de caséine présente un degré d'hydrolyse de 35-45 %.

6. Procédé de fabrication d'un produit aromatisant conférant le goût du fromage, caractérisé par le fait que l'on sépare une fraction aromatique contenant des substances aromatiques de la croûte d'un fromage à pâte dure ou midure et l'on en prépare une matière grasse aromatique que l'on mélange à raison de 15 à 30 parties en poids avec 5-40 parties en poids d'hydrolysat de protéines végétales et 3-20 parties en poids de leucine.

7. Procédé selon la revendication 6, caractérisé par le fait que l'on ajoute au mélange 1-20 parties en poids de glutamate monosodique, 1-5 parties en poids de chlorure de sodium, 1-20 parties en poids d'hydrolysat de caséine et 1-20 parties en poids de petit-lait en poudre.

8. Procédé selon la revendication 6, caractérisé par le fait que l'on sépare directement la matière grasse même de ladite croûte par pressage et/ou centrifugation pour obtenir ladite matière grasse aromatique.

9. Procédé selon la revendication 6, caractérisé par le fait que l'on sépare ladite fraction aromatique par distillation à la vapeur de ladite croûte et l'on prépare ladite matière grasse aromatique par extraction des substances aromatiques du distillat avec une huile végétale.

10. Procédé selon la revendication 7, caractérisé par le fait que ledit hydrolysat de caséine présente un degré d'hydrolyse de 35-45 %.

**Patentansprüche**

1. Käsegeschmack verleihender Geschmacksstoff, dadurch gekennzeichnet, daß er 5 - 40 Gewichtsteile eines Hydrolysates von Pflanzen proteinen, 3 - 20 Gewichtsteile Leucin und 15 - 30 Gewichtsteile; aromatische Fette umfaßt, welches Aromastoffe der Rinde eines Käses mit fester oder halbfester Masse enthält.

2. Geschmacksstoff nach Anspruch 1, dadurch gekennzeichnet, daß er außerdem 1 - 20 Gewichtsteile Mononatriumglutamat, 1 - 5 Gewichtsteile Natriumchlorid, 1 - 20 Gewichtsteile Kaseinhydrolysat und 1 - 20 Gewichtsteile pulverförmige Molke umfaßt.

3. Geschmacksstoff nach Anspruch 1, dadurch gekennzeichnet, daß das genannte aromatische Fett das eigentliche Fett der Rinde ist.

4. Geschmacksstoff nach Anspruch 1, dadurch gekennzeichnet, daß das genannte aromatische Fett ein Pflanzenöl ist, welches durch aus der Rinde extrahierte Aromastoffe aromatisiert ist.

5. Geschmacksstoff nach Anspruch 2, dadurch gekennzeichnet, daß das genannte Kaseinhydrolysat einen Hydrolysegrad von 35 - 45 % aufweist.

6. Verfahren zur Herstellung eines Käsegeschmack verleihenden Geschmacksstoffes, dadurch gekennzeichnet, daß man eine aromatische Fraktion abtrennt, welche Aromastoffe der Rinde eines Käses mit fester oder halbfester Masse enthält, und daß man ein aromati sches Fett herstellt, welches man in einer Menge von 15 bis 30 Gewichtsteilen mit 5 - 40 Gewichtsteilen eines Hydrolysates von Pflanzenproteinen und mit 3 - 20 Gewichtsteilen Leucin vermischt.

7. Verfahren nach Anspruch 6, dadurch gekennzeichnet, daß man die Mischung mit 1 - 20 Gewichtsteilen Mononatriumglutamat, 1-5 Gewichtsteilen Natriumchlorid, 1 - 20 Gewichtsteilen Kaseinhydrolysat und 1 - 20 Gewichtsteilen pulverförmiger Molke versetzt.

8. Verfahren nach Anspruch 6, dadurch gekennzeichnet, daß man zur Gewinnung des genannten aromatischen Fettes unmittelbar das eigentliche Fett der genannten Rinde durch Verpressen und/oder Zentrifugieren abtrennt.

9. Verfahren nach Anspruch 6, dadurch gekennzeichnet, daß man die genannte aromatische Fraktion durch Dämpfdestillation der genannten Rinde abtrennt, und daß man das genannte aromatische Fett durch Extraktion von Aromastoffen des Destillates mit einem Pflanzenölherstellt.

10. Verfahren nach Anspruch 7, dadurch gekennzeichnet, daß das genannte Kaseinhydrolysat einen Hydrolysegrad von 35 - 45 % aufweist.

## Claims

1. A flavouring product which imparts the flavour of cheese, characterized in that it contains from 5 to 40 parts by weight of vegetable protein hydrolyzate, from 3 to 20 parts by weight of leucine and from 15 to 30 parts by weight of aromatic fat containing aromatic substances from the crust of hard or semihard cheese.

2. A product as claimed in Claim 1, characterized in that it additionally contains from 1 to 20 parts by weight of monosodium glutamate, from 1 to 5 parts by weight of sodium chloride, from 1 to 20 parts by weight of casein hydrolyzate and from 1 to 20 parts by weight of whey powder.

3. A product as claimed in Claim 1, characterized in that the aromatic fat is the actual fat of the crust.

4. A product as claimed in Claim 1, characterized in that the aromatic fat is a vegetable oil flavoured by aromatic substances extracted from the crust.

5. A product as claimed in Claim 2, characterized in that the casein hydrolyzate has a degree of hydrolysis of 35 to 45 %.

6. A process for producing a flavouring product which imparts the flavour of cheese, characterized in that an aromatic fraction containing aromatic substances is separated from the crust of a hard or semihard cheese and made into an aromatic fat which is mixed in a quantity of from 15 to 30 parts by weight with from 5 to 40 parts by weight of vegetable protein hydrolyzate and from 3 to 20 parts by weight of leucine.

7. A process as claimed in Claim 6, characterized in that from 1 to 20 parts by weight of monosodium glutamate, from 1 to 5 parts by weight of sodium chloride, from 1 to 20 parts by weight of casein hydrolyzate and from 1 to 20 parts by weight of whey powder are added to the mixture.

8. A process as claimed in Claim 6, characterized in that the actual fat is directly separated from the crust by pressing and/or centrifuging to obtain the aromatic fat.

9. A process as claimed in Claim 6, characterized in that the aromatic fraction is separated by stripping the crust with steam and the aromatic fat is prepared by extracting the aromatic substances from the distillate with a vegetable oil.

10. A process as claimed in Claim 7, characterized in that the casein hydrolyzate has a degree of hydrolysis of from 35 to 45 %.